# EUROPÄISCHE PATENTSCHRIFT

(11) **EP 3 578 487 B1**
(45) Veröffentlichungstag und Bekanntmachung des Hinweises auf die Patenterteilung: **20.01.2021**
(21) Anmeldenummer: 19173200.7
(22) Anmeldetag: 08.05.2019
(51) Int. Cl.: B65G 35/06, B65H 5/04, B65H 5/22, B65H 29/16, B65H 29/24, B41J 11/06, B41J 13/08, B65H 5/02

(54) **DRUCKMASCHINE MIT EINER TRANSPORTVORRICHTUNG ZUM TRANSPORTIEREN VON BOGEN AUS BEDRUCKSTOFF**
PRINTING MACHINE WITH A TRANSPORT DEVICE FOR TRANSPORTING SHEETS TO BE PRINTED
MACHINE D'IMPRESSION DOTÉE D'UN DISPOSITIF DE TRANSPORT PERMETTANT DE TRANSPORTER DES FEUILLES D'UN MATÉRIAU D'IMPRESSION

(30) Priorität: 05.06.2018 DE 102018208796
(43) Veröffentlichungstag der Anmeldung: 11.12.2019
(73) Patentinhaber: Heidelberger Druckmaschinen AG, 69115 Heidelberg (DE)
(72) Erfinder: Müller, Andreas, 69120 Heidelberg (DE)

(56) Entgegenhaltungen:
- EP-A1- 3 067 211
- DE-A1- 19 745 313
- DE-A1-102016 201 762

## Beschreibung

Die Erfindung betrifft eine Druckmaschine mit den Merkmalen des Oberbegriffs von Anspruch 1.

### Technisches Gebiet der Erfindung

Die Erfindung liegt auf dem technischen Gebiet der grafischen Industrie und dort insbesondere im Bereich des Förderns von bogenförmigem Bedruckstoff, bevorzugt aus Papier, Karton, Pappe, Kunststoff oder Verbundmaterial.

### Stand der Technik

Für das Fördern von Bedruckstoffbogen z.B. durch eine Druckmaschine sind im Stand der Technik verschiedene Fördersysteme bekannt, z.B. Transportzylinder, Transportbänder oder so genannte Transporttische oder -tabletts.

Die EP3067211A1 offenbart eine Druckmaschine mit einem Tablett-Transportsystem, welches eine Mehrzahl von umlaufenden Transporttischen für Bedruckstoffbogen umfasst. Das System umfasst ferner zwei Antriebe: einen äußeren mit einer Kette und einen inneren, im Bereich einer Druckstation angeordneten, mit einem Zahnriemen. Beide Antriebe können zu Ungleichförmigkeiten bei der Bewegung der Bogen führen.

Die WO2012/108870A1 offenbart eine Vorrichtung zum Transportieren von Bedruckstoffbogen mit z.B. einem endlosen Band, welches ebene Transportsegmente mittels Rollen oder Stiften antreibt. Die Bedruckstoffbogen können dabei auf mehreren Segmenten aufliegen und mittels eines Vakuums gehalten werden. Das antreibende Band kann zu Ungleichförmigkeiten bei der Bewegung der Bogen führen.

Die DE 197 45 313 A1 offenbart eine gattungsgemäße Vorrichtung zum Dekorieren von Objekten, z.B. CDs, mit Objektträgern und einer Transportschnecke für die Objektträger.

Im Stand der Technik kann somit jeweils das Problem auftreten, dass das vorhandene Antriebssystem nicht die für das Erzeugen hochqualitativer Drucke erforderliche Gleichförmigkeit aufweist.

### Aufgabe

Es ist daher eine Aufgabe der Erfindung, eine Verbesserung gegenüber dem Stand der Technik zu schaffen, welche es insbesondere ermöglicht, Bogen aus Bedruckstoff mit hoher Gleichförmigkeit wenigstens durch den Wirkbereich einer Druckstation zu bewegen und somit zur Produktion hochqualitativer Druckerzeugnisse beiträgt.

### Erfindungsgemäße Lösung

Diese Aufgabe wird erfindungsgemäß durch eine Vorrichtung nach Anspruch 1 gelöst. Vorteilhafte und daher bevorzugte Weiterbildungen der Erfindung ergeben sich aus den Unteransprüchen sowie aus der Beschreibung und den Zeichnungen.

"Bogen aus Bedruckstoff" meint flache Substrate oder Artikel, welche unbedruckt und für das Bedrucken vorgesehen sind oder bereits bedruckt und für das weitere Bedrucken vorgesehen sind. "Bogen aus Bedruckstoff" meint insbesondere flache Substrate oder Artikel, welche flexibel oder starr (z.B. eine dünne Platte) sind, im Wesentlichen aus den Materialien Papier, Karton, Pappe, Wellpappe, Kunststoff oder Metall, insbesondere Kunststofffolie oder Metallfolie, oder in Form von Etiketten im Wesentlichen aus den Materialien Papier oder Kunststoff, insbesondere auf einem Träger.

Eine erfindungsgemäße Druckmaschine ist eine Druckmaschine mit einer Transportvorrichtung zum Transportieren von Bogen aus Bedruckstoff entlang eines Transportpfades der Transportvorrichtung durch die Druckmaschine und mit wenigstens einer Druckstation zum Bedrucken der Bogen, wobei: die Transportvorrichtung mehrere ebene Transporttische zum Tragen der Bogen umfasst, der Transportpfad einen ersten Abschnitt und einen zweiten Abschnitt umfasst, der erste Abschnitt sich vor und/oder nach der Druckstation erstreckt, der zweite Abschnitt sich entlang wenigstens der Druckstation erstreckt, die Transportvorrichtung einen ersten Antrieb zum Antreiben der Transporttische auf dem ersten Abschnitt umfasst, die Transportvorrichtung einen zweiten Antrieb zum Antreiben der Transporttische auf dem zweiten Abschnitt umfasst, und wobei die Transporttische jeweils wenigstens eine Antriebsrolle oder einen - von einer Antriebsrolle verschiedenen - Wälzkörper oder Gleitkörper umfassen und der zweite Antrieb eine Antriebsspindel umfasst, welche die Antriebsrollen oder die Wälzkörper oder die Gleitkörper antreibt, zeichnet sich dadurch aus, dass die Transporttische jeweils wenigstens einen Mitnehmer und/oder eine Koppel umfassen und dass der erste Antrieb einen Antriebsriemen oder eine Antriebskette umfasst, welcher/welche die Mitnehmer oder Koppeln antreibt.

Erfindungsgemäß ausgestattete Druckmaschinen ermöglichen es in vorteilhafter Weise, Bogen aus Bedruckstoff mit hoher Gleichförmigkeit wenigstens durch den Wirkbereich einer Druckstation (und optional: durch den Wirkbereich einer vorgeordneten Precoating-Station, nachgeordneten Lackier-Station und/oder nachgeordneten Trocknungs-/Härtungs-Station) zu bewegen und somit hochqualitativer Druckerzeugnisse zu produzieren.

Transportsysteme mit Transporttischen oder -segmenten weisen zudem eine hohe Modularität auf und können so auf verschiedene Druckmaschinen bzw. deren Konfigurationen oder Längen angepasst werden. Schließlich erlauben die Tische oder Segment einen ebenen Transport wenigstens im Wirkbereich der Druckstation.

Der erfindungsgemäße Einsatz einer oder auch mehrerer Antriebsspindeln in Verbindung mit dem Einsatz von Antriebsrollen (oder alternativ anderen Wälzköpern oder Gleitkörpern/-stücken) erlaubt es, die Transporttische und damit die Bogen hochpräzise und insbesondere gleichförmig an der Druckstation vorbei zu führen und hochpräzise zu bedrucken. Die Antriebsrollen können bevorzugt ballig ausgeführt sein. Die von Antriebsrollen verschiedenen Wälzkörper können bevorzugt als Kugeln ausgebildet sein.

Es kann zusätzlich ein Drehgeber auf der Antriebsspindel vorgesehen sein, welcher die Drehgeschwindigkeit misst und mit einem Rechner in Verbindung steht, welcher bei gemessenen Ungleichförmigkeiten der Drehgeschwindigkeit die Ansteuerung, insbesondere Taktung zur Druckpunkterzeugung derart anpasst, dass ein hochpräzises Drucken ermöglicht wird und dass insbesondere Querstreifen im Druckbild vermieden werden. Der Drehgeber kann alternativ an einer Stützrolle der Antriebsspindel vorgesehen sein. Es kann alternativ oder zusätzlich eine Fehlerkurve der Spindelsteigung digital hinterlegt sein und der Rechner kann diese bei der Ansteuerung der Druckstation zur Druckpunkterzeugung berücksichtigen.

Die Antriebsspindel kann indirekt über ein oder mehrere Zahnräder oder direkt von einem Motor angetrieben werden. Der Motor kann auch in die Spindel integriert sein.

Anstelle einer Antriebsspindel können auch zwei oder mehr in Transportrichtung aufeinander folgende Antriebsspindeln vorgesehen sein.

Die Transporttische oder Transportsegmente können aus Aluminium, z.B. durch Fräsen gefertigt werden.

Der erste Antrieb und der zweite Antrieb können mechanisch miteinander gekoppelt sein. Alternativ können der erste Antrieb und der zweite Antrieb jeweils einen synchronisierten Motor umfassen.

### Weiterbildungen der Erfindung

Eine bevorzugte Weiterbildung der Erfindung kann sich dadurch auszeichnen, dass die Transporttische auf dem zweiten Abschnitt von dem ersten Antrieb entkoppelbar oder entkoppelt sind. Auf diese Weise erfolgt insbesondere ein Entkoppeln von Störungen durch den ersten Antrieb, wodurch es möglich wird, hochpräzise zu drucken.

Eine bevorzugte Weiterbildung der Erfindung kann sich dadurch auszeichnen, dass die Transporttische auf dem ersten Abschnitt von dem zweiten Antrieb entkoppelbar oder entkoppelt sind. Auf diese Weise können die Transporttische abseits der Druckstation mit einer weniger präzisen Antriebstechnik angetrieben werden und dadurch Kosten eingespart werden.

Eine bevorzugte Weiterbildung der Erfindung kann sich dadurch auszeichnen, dass die Mitnehmer zum Entkoppeln der Transporttische von dem Antriebsriemen mittels wenigstens jeweils einer Feder mit dem Antriebsriemen verbunden sind. Es kann alternativ oder zusätzlich wenigstens ein dämpfendes Element vorgesehen sein. Alternativ oder zusätzlich zur Feder kann ein Dämpfer vorgesehen sein. Alternativ oder zusätzlich zur Feder und/oder zum Dämpfer kann eine Kupplung vorgesehen sein.

Eine bevorzugte Weiterbildung der Erfindung kann sich dadurch auszeichnen, dass eine Drehachse der Antriebsspindel parallel zum zweiten Abschnitt des Transportpfads angeordnet ist.

Eine bevorzugte Weiterbildung der Erfindung kann sich dadurch auszeichnen, dass die Antriebsspindel von wenigstens einer Stützrolle gestützt ist.

Eine bevorzugte Weiterbildung der Erfindung kann sich dadurch auszeichnen, dass eine zur Antriebsspindel parallel angeordnete, weitere Antriebsspindel zum Antreiben der Transporttische auf dem zweiten Abschnitt vorgesehen ist.

Eine bevorzugte Weiterbildung der Erfindung kann sich dadurch auszeichnen, dass die Transporttische jeweils von mehreren, ebenen Transportsegmenten gebildet sind.

Die Merkmale der Erfindung, der Weiterbildungen der Erfindung und der Ausführungsbeispiele zur Erfindung stellen auch in beliebiger Kombination miteinander vorteilhafte Weiterbildungen der Erfindung dar. Weiterbildungen der Erfindung können zudem die - im obigen Abschnitt "Technisches Gebiet der Erfindung" offenbarten - Einzelmerkmale oder Merkmalskombinationen aufweisen.

### Ausführungsbeispiele zur Erfindung

Die Erfindung und deren bevorzugte Weiterbildungen werden nachfolgend unter Bezug auf die Zeichnungen anhand bevorzugter Ausführungsbeispiele näher beschrieben. Einander entsprechende Merkmale sind in den Figuren mit denselben Bezugszeichen versehen.

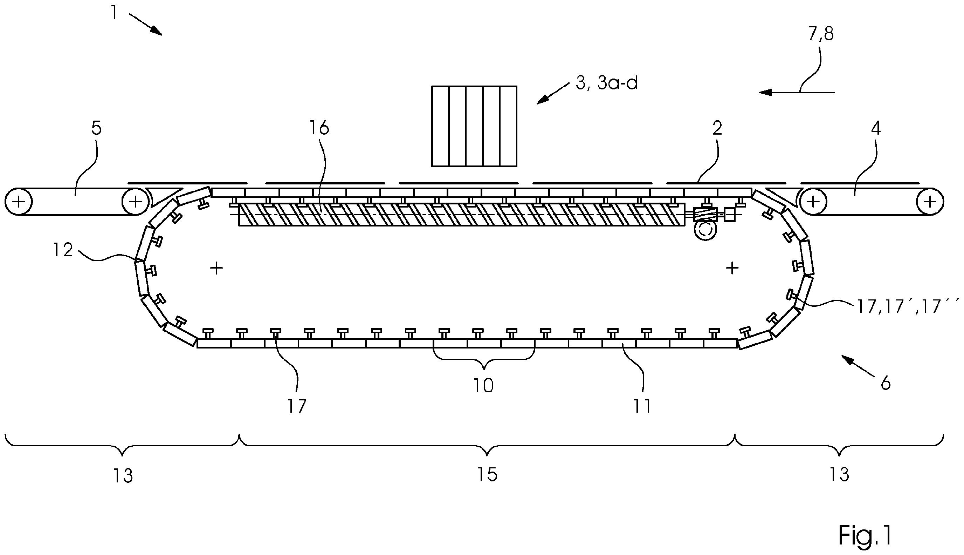

Die Zeichnungen zeigen in den Figuren 1 bis 11 Ansichten von bevorzugten Ausführungsbeispielen der erfindungsgemäßen Druckmaschine, sowie deren Details.

Figur 1 zeigt eine Seitenansicht eines bevorzugten Ausführungsbeispiels einer erfindungsgemäßen Druckmaschine.

In Figur 1 ist eine Druckmaschine 1 zum Fördern und Bedrucken von Bogen 2 aus Bedruckstoff gezeigt. Die Bogen werden von einem Anleger 4 kommend durch die Druckmaschine zu einem Anleger 5 gefördert. Zum Bedrucken der Bogen werden diese durch eine Druckstation 3 mit mehreren Druckköpfen 3a-3d gefördert. Dabei können die Bogen beispielsweise im Vierfarbdruck bedruckt werden.

Figur 1 zeigt weiterhin eine Transportvorrichtung 6 für die Bogen 2, welche die Bogen in eine Transportrichtung 7 auf einem Transportpfad 8 durch die Druckmaschine 1 und entlang der Druckstation 3 fördert. Die Transportvorrichtung weist Transporttische 10 auf, welche von jeweils einem Transportsegment 11 oder mehreren Transportsegmenten 11 gebildet sein können. Die Transportsegmente bilden dabei eine umlaufende Kette. Zwischen den Segmenten können sich Spalte 12 befinden, welche beispielsweise eine Breite von wenigen Zehntel Millimetern aufweisen. In dem gezeigten Beispiel wird ein jeweiliger Transporttisch 10 von drei aufeinanderfolgend bewegter Transportsegmente 11 gebildet.

Figur 1 lässt einen ersten Abschnitt 13 erkennen. In diesem Abschnitt werden die Bogen 2 außerhalb der Druckstation 3 geführt. Der erste Abschnitt verfügt über einen ersten Antrieb 14, welcher bevorzugt einen Zahnriemen umfasst. Dieser erste Antrieb ist in den Figuren 2 und 3 und auch in den Figuren 8 und 9 (dort als Zahnriemen 20) deutlich erkennbar. Es kann ein Zahnriemen vorgesehen sein oder es können zwei oder mehr parallele Zahnriemen vorgesehen sein. Anstelle der Zahnriemen können auch Ketten, Bänder oder Seile zum Einsatz kommen.

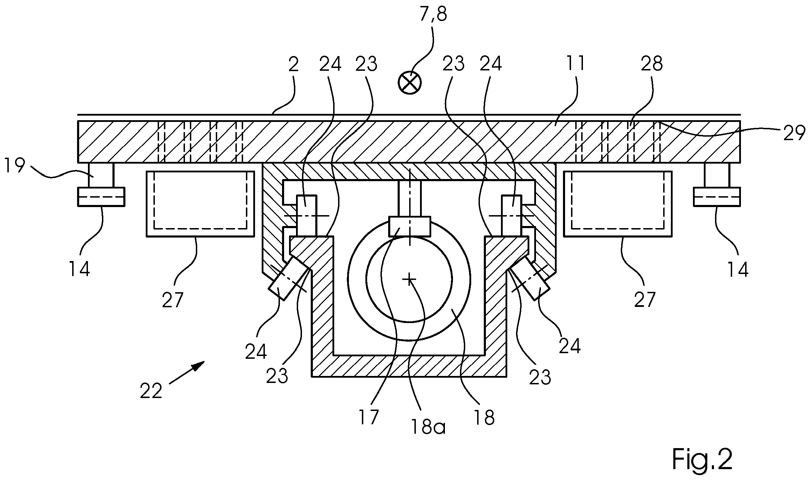

Die Transportvorrichtung 6 verfügt weiterhin über einen zweiten Abschnitt 15, in welchem die Bogen 2 an der Druckstation 3 bzw. an deren Druckköpfen 3a-d vorbeigeführt werden. Mit anderen Worten: Der zweite Abschnitt 15 ist der Druckstation 3 zugeordnet. Der Antrieb der Segmente 11 auf dem zweiten Abschnitt 15 erfolgt durch einen zweiten Antrieb 16, welcher eine Antriebsspindel 16 umfasst. Die Antriebsspindel ist auch in den weiteren Figuren 2 bis 11 (dort mit dem Bezugszeichen 18) deutlich erkennbar dargestellt.

Für den Antrieb weist jedes Segment 11 wenigstens eine Antriebsrolle 17 auf. Anstelle der Antriebsrollen 17 könnten auch andere Wälzkörper 17', z.B. Kugeln, oder Gleitkörper 17", z.B. Gleitstücke, vorgesehen sein. Die Antriebsspindel 16 führt eine gleichförmige Drehbewegung aus, so dass die von ihr mitgenommenen und somit angetriebenen Segmente 11 eine gleichförmige Bewegung in der Transportrichtung 7 ausführen. Es kann auch vorgesehen sein, dass mehrere Segmente 11 gekoppelt werden und eine gemeinsame Antriebsrolle/Wälzkörper/Gleitkörper aufweisen.

Figur 2 zeigt eine Schnittansicht des bevorzugten Ausführungsbeispiels einer erfindungsgemäßen Druckmaschine gemäß Figur 1.

In der in Figur 2 gezeigten Schnittansicht ist die Antriebsspindel 18 zentral dargestellt. Diese dreht sich mit einer gleichförmigen Drehgeschwindigkeit um ihre Drehachse 18a.

Die Bogen 2 aus Bedruckstoff liegen auf der Oberfläche der Transportsegmente 11 auf. Das Halten der Bogen kann mittels Saugluft erfolgen. Hierzu sind jeweilige Saugkasten 27 vorgesehen, welche mit Saugbohrungen 28 und deren zum Bogen hin weisenden Saugöffnungen 29 in Verbindung stehen. Wie in Figur 2 gezeigt, kann das Halten der Bogen 2 am jeweiligen lateralen Rand der Bogen durch die Saugluft erfolgen. Die Saugkasten können zur Einstellung auf verschiedene Bogenformate in lateraler Richtung verstellbar sein. Auch die Saugstärke kann einstellbar sein, z.B. bei verschiedenen Grammaturen.

Die Führung der Transportsegmente 11 kann über Führungsbahnen 23 und Führungsrollen 24 erfolgen. Hierzu kann eine Führungseinrichtung 22 bzw. eine Führung vorgesehen sein. Die Antriebsspindel 18 kann bevorzugt in der Führungseinrichtung 22 aufgenommen sein.

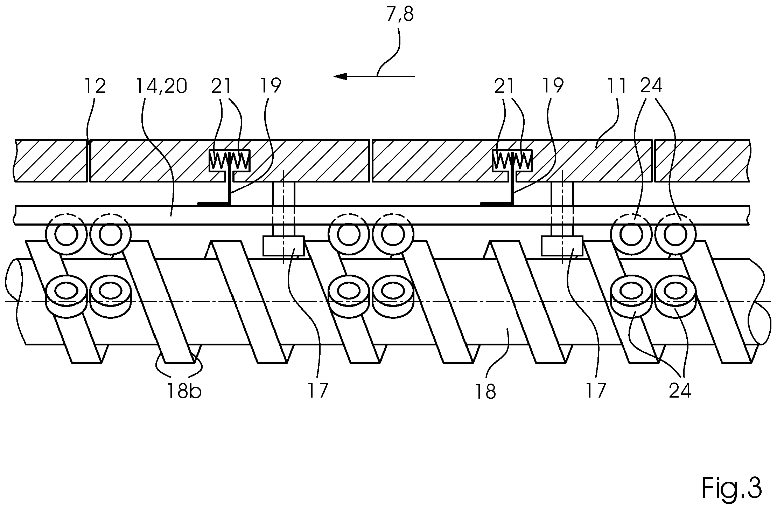

Figur 2 zeigt auch zwei Zahnriemen 14, die jeweilige Mitnehmer 19 (oder Koppeln 19) der Transportsegmente 11 antreiben. Die Mitnehmer können dabei federnd aufgenommen sein, was in der Figur 3 deutlich zu erkennen ist. Die Zahnriemen fördern die Segmente entlang der gezeigten umlaufenden Führungsbahnen. Die Führungsrollen definieren dabei die Bewegung der Segmente präzise und spielfrei entlang der Führungsbahnen. Im Bereich direkt vor, direkt hinter und unter den Druckköpfen nutzen die Segmente 11 eine Elastizität zwischen den Zahnriemen 14 und den Segmenten 11 aus, um von der Antriebsspindel 18 mit großer Präzision und Gleichförmigkeit synchron zu den jeweils benachbarten Segmenten 11 bewegt werden zu können. Auf diese Weise kann eine störende Bildung von Querstreifen in vorteilhafter Weise während des Druckens vermieden werden. Außerdem werden in vorteilhafter Weise Ungleichförmigkeiten bzw. Störungen infolge der Bewegung der Segmente 11 außerhalb des zweiten Bereichs 15 nicht auf die Segmente 11 bzw. deren Bewegung innerhalb des zweiten Bereichs 15 übertragen.

Figur 3 zeigt eine Detailansicht des bevorzugten Ausführungsbeispiels einer erfindungsgemäßen Druckmaschine, z.B. gemäß Figur 1.

In Figur 3 ist wiederum die Antriebsspindel 18 deutlich dargestellt. Es ist zudem erkennbar, dass die Mitnehmer 19 der jeweiligen Segmente von dem Zahnriemen 14 bzw. 20 über Federn 21 gelagert mitgenommen werden. In Figur 3 sind auch die Spalte 12 zwischen den Segmenten 11 erkennbar.

Die Antriebsspindel 18 weist zwei Laufflächen 18b auf. Die Antriebsrollen 17 laufen auf diesen Flächen bzw. werden durch den Kontakt zu diesen Flächen in Transportrichtung 8 angetrieben. Weiterhin zeigt Figur 3 die Führungsrollen 24.

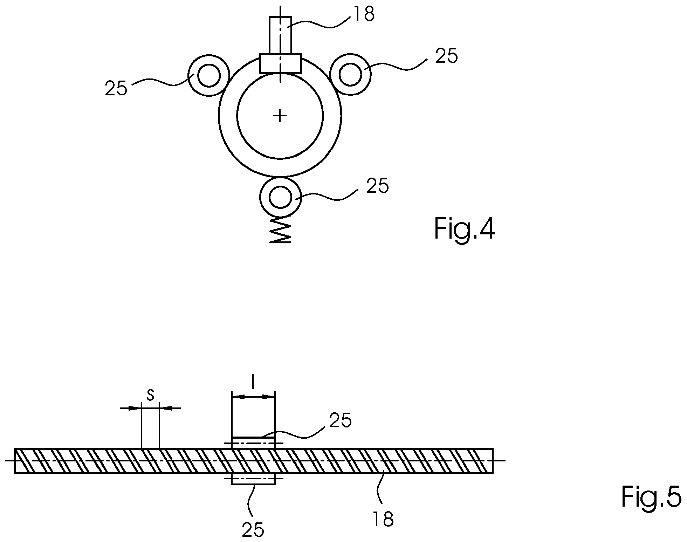

Figur 4 zeigt eine Schnittansicht des bevorzugten Ausführungsbeispiels einer erfindungsgemäßen Druckmaschine gemäß Figur 1 oder Figur 3.

In Figur 4 ist dargestellt, wie eine Antriebsspindel 18 mit einer vorgegebenen Länge abgestützt und dadurch die Präzision des Antriebs verbessert werden kann. Hierzu sind Stützrollen 25 eingesetzt. Eine der drei dargestellten Stützrollen ist federnd gelagert.

Figur 5 zeigt eine Detailansicht des bevorzugten Ausführungsbeispiels einer erfindungsgemäßen Druckmaschine gemäß Figur 1 oder Figur 3.

In Figur 5 ist erkennbar, dass die Stützrollen 7 eine jeweilige Länge 1 aufweisen, welche größer ist als die dargestellte Ganghöhe s der Stützrolle 18. Auf diese Weise bleibt die Antriebsspindel mit ihrer Außenfläche immer in Kontakt mit den Stützrollen.

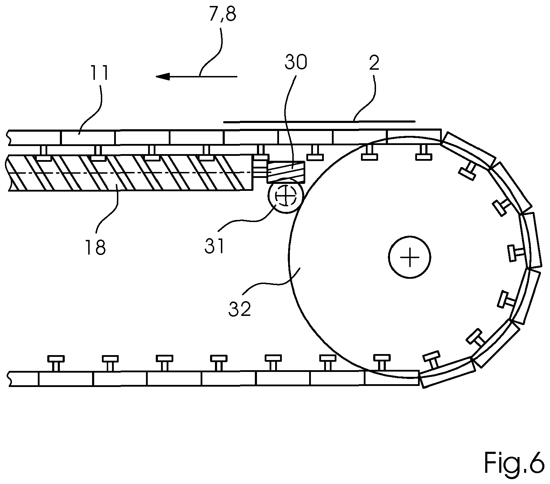

Figur 6 zeigt eine Seitenansicht (Teilansicht) des bevorzugten Ausführungsbeispiels einer erfindungsgemäßen Druckmaschine gemäß Figur 1 oder Figur 3.

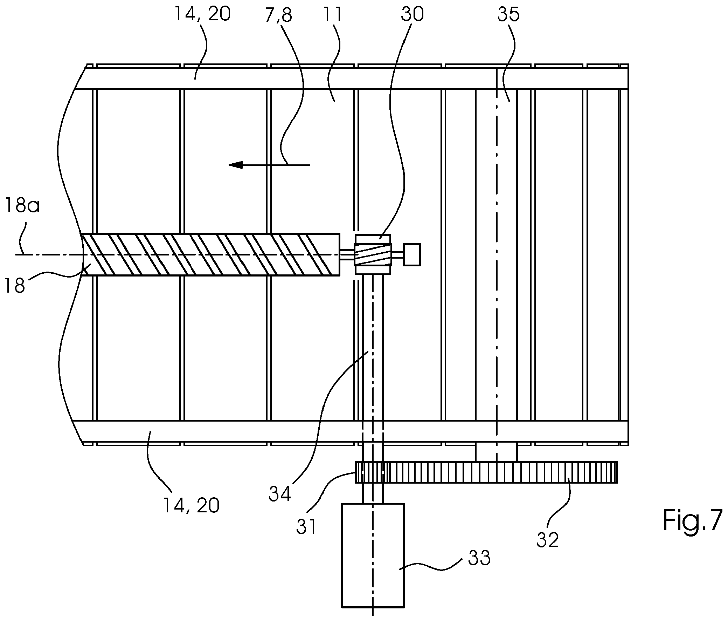

Figur 7 zeigt eine Draufsicht (Teilansicht) des bevorzugten Ausführungsbeispiels einer erfindungsgemäßen Druckmaschine gemäß Figur 1 oder Figur 3.

In den Figuren 6 und 7 ist gezeigt, wie die Antriebsspindel 18 zu den Zahnriemen 14 bzw. 20 synchronisiert werden kann. Ein Antrieb 33, z.B. ein Elektromotor, treibt über eine Antriebswelle 34 und einen Schneckentrieb 30 die Antriebsspindel 18 an. Über ein erstes Zahnrad 31, welches auf der Antriebswelle 34 angeordnet ist, wird ein zweites Zahnrad 32 angetrieben. Eine Zahnriemenwelle 35, auf welcher das zweite Zahnrad 32 angeordnet ist, treibt die beiden Zahnriemen 14 bzw. 20 an. Die Zahnriemenwelle 35 synchronisiert dabei die beiden Zahnriemen 14 bzw. 20. Die Ganghöhe s bzw. die Spindelsteigung ist dabei in vorteilhafter Weise so ausgelegt, dass der resultierende Vorschub der Segmente 11 synchron zu dem Vorschub der Zahnriemen erfolgt.

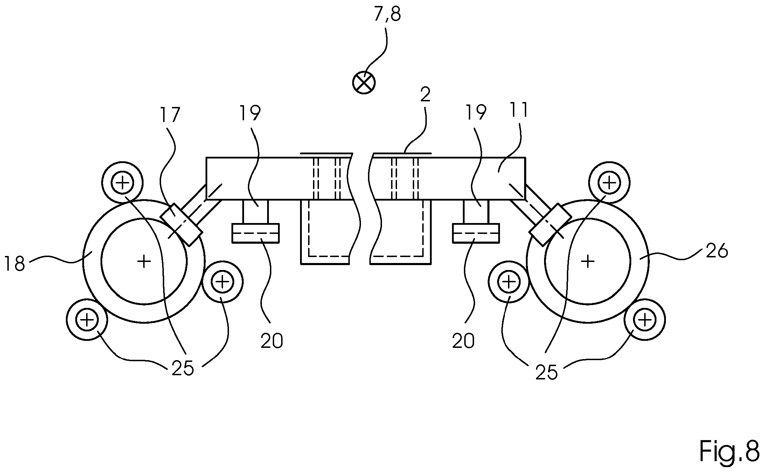

Figur 8 zeigt eine Schnittansicht eines weiteren bevorzugten Ausführungsbeispiels einer erfindungsgemäßen Druckmaschine.

In Figur 8 ist eine Ausführungsform der Erfindung mit zwei Antriebsspindeln gezeigt. Hierzu ist neben der bereits genannten Antriebsspindel 18 eine weitere Antriebsspindel 26 vorgesehen. Die beiden Antriebsspindeln können sich jeweils in lateraler Position bezüglich der Transportrichtung 7 befinden. Auch bei dieser Ausführungsform können Stützrollen 25 vorgesehen sein. Die Transportsegmente 11 stehen nun jeweils mit einer von wenigstens zwei Antriebsrollen 17 mit jeder Antriebsspindel in Verbindung.

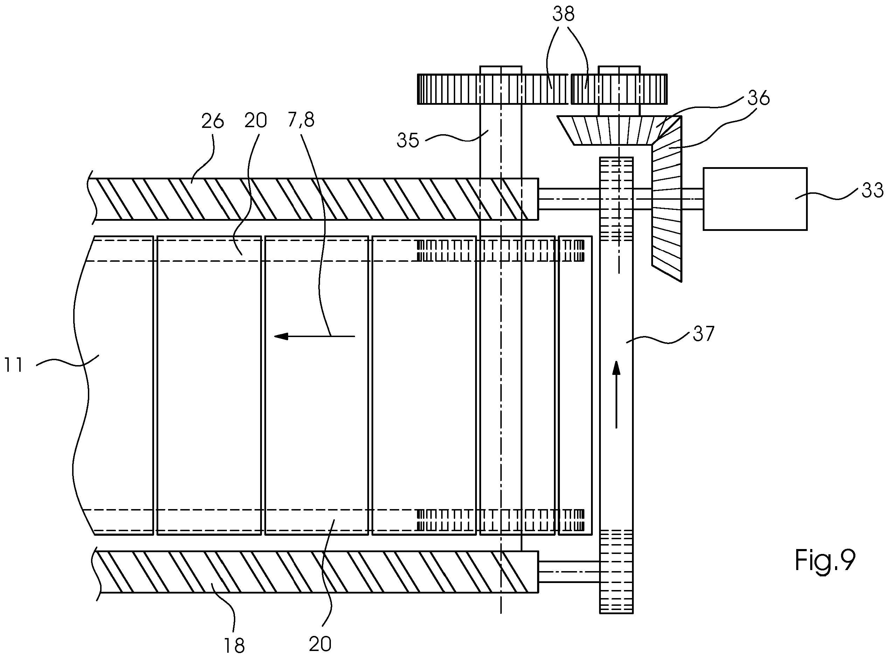

Figur 9 zeigt eine Draufsicht (Teilansicht) des bevorzugten Ausführungsbeispiels einer erfindungsgemäßen Druckmaschine gemäß Figur 8.

In Figur 9 ist der Antrieb für die Ausführungsform mit zwei Antriebsspindeln gezeigt. Es ist erkennbar, dass es möglich ist, eine der beiden Antriebsspindeln direkt mit einem Antrieb 33 anzutreiben und die andere der beiden Antriebsspindeln z.B. über einen Synchronisationsriemen 37 anzutreiben bzw. zu synchronisieren. Der Antriebsstrang weist ferner Kegelzahnräder 36 auf. Über die beiden Kegelzahnräder und ein nachgeschaltetes Zahnradpaar 38 können die Zahnriemen mit dem Antrieb der Antriebsspindeln 18 und 26 synchronisiert werden.

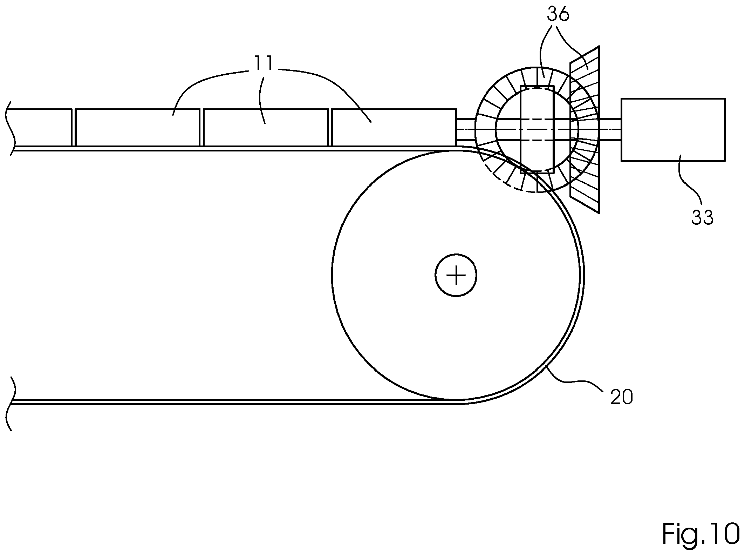

Figur 10 zeigt eine Seitensicht (Teilansicht) des bevorzugten Ausführungsbeispiels einer erfindungsgemäßen Druckmaschine gemäß Figur 8.

In Figur 10 sind der Antrieb 33, die Kegelzahnräder 36 und die über die Kegelzahnräder mit der Antriebsspindel 18 synchronisierten Zahnriemen 20 dargestellt.

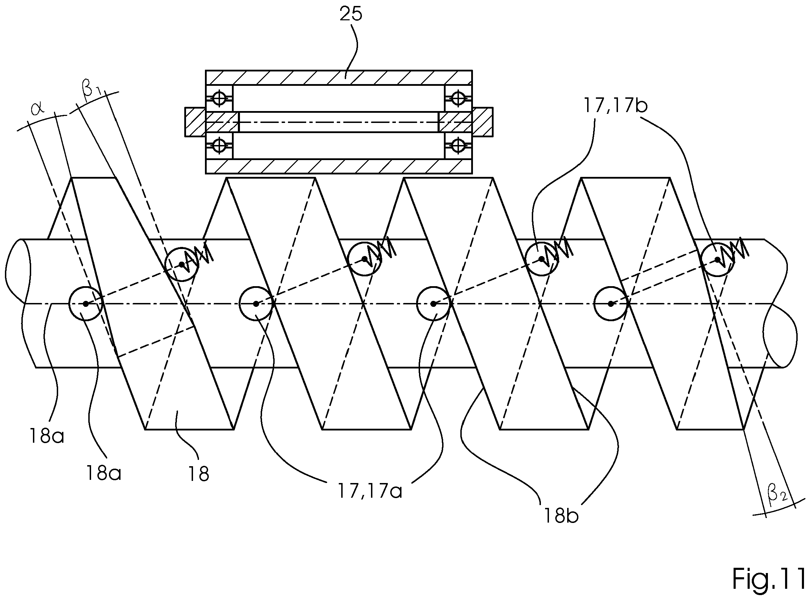

Figur 11 zeigt eine Seitensicht (Teilansicht) des Weiteren bevorzugten Ausführungsbeispiels einer erfindungsgemäßen Druckmaschine.
In Figur 11 ist das Zusammenwirken der Antriebsspindel 18 bzw. deren Oberfläche mit den Stützrollen 25 detailliert dargestellt. Zudem ist dargestellt, dass auf den Laufflächen 18b Antriebslager 17a und gefederte Gegenlager 17b laufen. Beide Lager sind bevorzugt an demselben Transportsegment 11 angeordnet. Die Antriebslager 17a entsprechen dabei den Antriebsrollen 17. Ein Einfedern eines Gegenlagers eines jeden neuen Segmentes 11, welches gerade in die Antriebsspindel 18 einfedert, passiert zeitgleich mit dem Ausfedern des gerade auf der Antriebsspindel auslaufenden Segmentes, um in Summe keine oder eine möglichst kleine Störung auf die Antriebsspindel auszuüben. Hierfür sind die Ein- und Auslaufschrägen β1 und β2 der Laufflächen 18b vorgesehen. Da die Winkellage der Gegenlager 17b immer gleich ist, ist der Winkelversatz der Ein- und Auslaufschrägen β1 und β2 zueinander definiert. In der Figur sind beispielhaft links das Einlaufen und rechts das Auslaufen dargestellt.

Um die Antriebsrollen 17 möglichst sanft auf die Lauffläche 18b der Antriebsspindel 18 zu führen, ist eine Anlaufschräge α vorgesehen. Diese Anlaufschräge ist dabei in vorteilhafter Weise derart ausgeführt, dass sie ein jeweiliges Transportsegment 11 auch bei dessen maximaler Auslenkung relativ zu dem Zahnriemen 14 bzw. 20 und unter Berücksichtigung aller sonstigen Toleranzen einfängt. Auf der Auslaufseite (rechts) ist keine Schräge mit Winkel α erforderlich.

### Bezugszeichenliste

- 1: Druckmaschine
- 2: Bogen aus Bedruckstoff
- 3: Druckstation
- 3a-d: Druckköpfe
- 4: Anleger
- 5: Ausleger
- 6: Transportvorrichtung
- 7: Transportrichtung
- 8: Transportpfad
- 10: Transporttische
- 11: Transportsegmente
- 12: Spalte
- 13: erster Abschnitt
- 14: erster Antrieb/Zahnriemen/Kette
- 15: zweiter Abschnitt
- 16: zweiter Antrieb/Antriebsspindel
- 17: Antriebsrollen
- 17': Wälzkörper
- 17": Gleitköper
- 17a: Antriebslager/Antriebswälzkörper/Antriebsrollen
- 17b: gefederte Gegenlager/Gegenwälzkörper/Gegenrollen
- 18: Antriebsspindel
- 18a: Drehachse
- 18b: Lauffläche
- 19: Mitnehmer/Koppel
- 20: Antriebsriemen/Zahnriemen
- 21: Federn
- 22: Führung
- 23: Führungsbahnen
- 24: Führungsrollen
- 25: Stützrollen
- 26: weitere Antriebsspindel
- 27: Saugkasten
- 28: Saugbohrungen
- 29: Saugöffnungen
- 30: Schneckentrieb
- 31: erstes Zahnrad
- 32: zweites Zahnrad
- 33: Antrieb/Motor
- 34: Antriebswelle
- 35: Zahnriemenwelle
- 36: Kegelzahnräder
- 37: Synchronisationsriemen
- 38: Zahnriemenräder

- s: Ganghöhe
- 1: Länge der Stützrollen
- α: Anlaufwinkel/Anlaufschräge
- β1: Einlaufwinkel/Einlaufschräge
- β2: Auslaufwinkel/Auslaufschräge

## Patentansprüche

1. Druckmaschine mit einer Transportvorrichtung zum Transportieren von Bogen (2) aus Bedruckstoff entlang eines Transportpfades (8) der Transportvorrichtung (6) durch die Druckmaschine (1) und mit wenigstens einer Druckstation (3) zum Bedrucken der Bogen, wobei:
- die Transportvorrichtung mehrere ebene Transporttische (10) zum Tragen der Bogen umfasst,
- der Transportpfad einen ersten Abschnitt (13) und einen zweiten Abschnitt (15) umfasst,
- der erste Abschnitt sich vor und/oder nach der Druckstation erstreckt,
- der zweite Abschnitt sich entlang wenigstens der Druckstation erstreckt,
- die Transportvorrichtung einen ersten Antrieb (14) zum Antreiben der Transporttische auf dem ersten Abschnitt umfasst,
- die Transportvorrichtung einen zweiten Antrieb (16) zum Antreiben der Transporttische auf dem zweiten Abschnitt umfasst,
und wobei die Transporttische (10) jeweils wenigstens eine Antriebsrolle (17) oder einen - von einer Antriebsrolle verschiedenen - Wälzkörper (17') oder Gleitkörper (17") umfassen und der zweite Antrieb (16) eine Antriebsspindel (16,18) umfasst, welche die Antriebsrollen oder die Wälzkörper oder die Gleitkörper antreibt,
**dadurch gekennzeichnet,**
**dass** die Transporttische (10) jeweils wenigstens einen Mitnehmer (19) und/oder eine Koppel (19) umfassen und dass der erste Antrieb (14) einen Antriebsriemen (14) oder eine Antriebskette (14) umfasst, welcher/welche die Mitnehmer oder Koppeln antreibt.

2. Druckmaschine nach Anspruch 1,
**dadurch gekennzeichnet,**
**dass** die Transporttische (10) auf dem zweiten Abschnitt (15) von dem ersten Antrieb (14) entkoppelbar oder entkoppelt sind.

3. Druckmaschine nach Anspruch 2,
**dadurch gekennzeichnet,**
**dass** die Transporttische (10) auf dem ersten Abschnitt (13) von dem zweiten Antrieb (16) entkoppelbar oder entkoppelt sind.

4. Druckmaschine nach einem der vorhergehenden Ansprüche,
**dadurch gekennzeichnet,**
**dass** die Mitnehmer (19) zum Entkoppeln der Transporttische (10) von dem Antriebsriemen (14) mittels wenigstens jeweils einer Feder (21) mit dem Antriebsriemen verbunden sind.

5. Druckmaschine nach einem der vorhergehenden Ansprüche,
**dadurch gekennzeichnet,**
**dass** eine Drehachse (18a) der Antriebsspindel (18) parallel zum zweiten Abschnitt (15) des Transportpfads (8) angeordnet ist.

6. Druckmaschine nach einem der vorhergehenden Ansprüche,
**dadurch gekennzeichnet,**
**dass** die Antriebsspindel (18) von wenigstens einer Stützrolle (25) gestützt ist.

7. Druckmaschine nach einem der vorhergehenden Ansprüche,
**dadurch gekennzeichnet,**
**dass** eine zur Antriebsspindel (18) parallel angeordnete, weitere Antriebsspindel (26) zum Antreiben der Transporttische (10) auf dem zweiten Abschnitt (15) vorgesehen ist.

8. Druckmaschine nach einem der vorhergehenden Ansprüche,
**dadurch gekennzeichnet,**
**dass** die Transporttische (10) jeweils von mehreren, ebenen Transportsegmenten (11) gebildet sind.

## Claims

1. Printing machine including a transport device for transporting sheets (2) of printing material along a transport path (8) of the transport device (6) through the printing machine (1) and including at least one printing station (3) for printing on the sheets, wherein
- the transport device comprises multiple flat transport tables (10) for carrying the sheets,
- the transport path comprises a first section (13) and a second section (15),
- the first section extends upstream and/or downstream of the printing station,
- the second section extends along the at least one printing station,
- the transport device comprises a first drive (14) for driving the transport tables in the first section,
- the transport device comprises a second drive (16) for driving the transport tables in the second section,
and wherein each one of the transport tables (10) comprises at least one drive roller (17) or rolling body (17') different from a drive roller or sliding body (17") and the second drive (16) comprises a drive spindle (16, 18) for driving the drive rollers or rolling bodies or sliding bodies,
**characterized**
**in that** each one of the transport tables (10) comprises at least one entrainment element (19) and/or a coupler (19) and in that the first drive (14) comprises a drive belt (14) or a drive chain (14) for driving the entrainment elements or couplers.

2. Printing machine according to claim 1,
**characterized**
**in that** the transport tables (10) in the second section (15) are uncoupleable or uncoupled from the first drive.

3. Printing machine according to claim 2,
**characterized**
**in that** the transport tables (10) in the first section (13) are uncoupleable or uncoupled from the second drive (16).

4. Printing machine according to claim 2,
**characterized**
**in that** the entrainment elements (19) are connected to the drive belt (14) by means of at least one spring (21) for uncoupling the transport tables (10) from the drive belt.

5. Printing machine according to any one of the preceding claims,
**characterized**
**in that** an axis of rotation (18a) of the drive spindle (18) is disposed to be parallel to the second section (15) of the transport path (8).

6. Printing machine according to any one of the preceding claims,
**characterized**
**in that** the drive spindle (18) is supported by at least one support roller (25).

7. Printing machine according to any one of the preceding claims,
**characterized**
**in that** a further drive spindle (26) disposed to be parallel to the drive spindle (18) is provided to drive the transport tables (10) in the second section (15).

8. Printing machine according to any one of the preceding claims,
**characterized**
**in that** the transport tables (10) are formed of multiple flat transport segments (11).

## Revendications

1. Machine à imprimer avec un dispositif de transport pour le transport de feuilles (2) en support d'impression le long d'un chemin de transport (8) du dispositif de transport (6) traversant la machine à imprimer (1) et avec au moins un poste d'impression (3) pour l'impression des feuilles, pour laquelle :
- le dispositif de transport comprend plusieurs tables de transport planes (10) pour porter les feuilles,
- le chemin de transport comporte une première section (13) et une deuxième section (15),
- la première section s'étend en amont et/ou en aval du poste d'impression,
- la deuxième section s'étend le long du poste d'impression au moins,
- le dispositif de transport comprend un premier entraînement (14) pour l'entraînement des tables de transport sur la première section,
- le dispositif de transport comprend un deuxième entraînement (16) pour l'entraînement des tables de transport sur la deuxième section,
et pour laquelle les tables de transport (10) comprennent respectivement au moins un rouleau d'entraînement (17) ou bien un élément de roulement (17') ou élément coulissant (17") - différent(s) d'un rouleau d'entraînement - et le deuxième entraînement (16) comprend une broche d'entraînement (16,18), qui entraîne les rouleaux d'entraînement ou les éléments de roulement ou les éléments coulissants,
**caractérisée en ce**
**que** les tables de transport (10) comprennent respectivement au moins un entraîneur (19) et/ou un coupleur (19) et que le premier entraînement (14) comprend une courroie d'entraînement (14) ou une chaîne d'entraînement (14) qui entraîne les entraîneurs ou coupleurs.

2. Machine à imprimer selon la revendication 1,
**caractérisée en ce**
**que** les tables de transport (10) sur la deuxième section (15) peuvent être ou sont découplées du premier entraînement (14).

3. Machine à imprimer selon la revendication 2,
**caractérisée en ce**
**que** les tables de transport (10) sur la première section (13) peuvent être ou sont découplées du deuxième entraînement (16).

4. Machine à imprimer selon l'une des revendications précédentes,
**caractérisée en ce**
**que** les entraîneurs (19) pour le découplage des tables de transport (10) des courroies d'entraînement (14) sont reliés par au moins un ressort (21) avec les courroies d'entraînement.

5. Machine à imprimer selon l'une des revendications précédentes,
**caractérisée en ce**
**qu'**un axe rotatif (18a) de la broche d'entraînement (18) est disposé parallèlement à la deuxième section (15) du chemin de transport (8).

6. Machine à imprimer selon l'une des revendications précédentes,
**caractérisée en ce**
**que** la broche d'entraînement (18) est supportée par au moins un rouleau d'appui (25).

7. Machine à imprimer selon l'une des revendications précédentes,
**caractérisée en ce**
**qu'**une autre broche d'entraînement (26) disposée parallèlement à la broche d'entraînement (18) est prévue pour l'entraînement des tables de transport (10) sur la deuxième section (15).

8. Machine à imprimer selon l'une des revendications précédentes,
**caractérisée en ce**
**que** les tables de transport (10) sont respectivement constituées par plusieurs segments de transport (11) plans.
